# EUROPÄISCHE PATENTANMELDUNG

(11) **EP 2 253 693 A1**
(43) Veröffentlichungstag der Anmeldung: **24.11.2010**
(21) Anmeldenummer: 10005015.2
(22) Anmeldetag: 12.05.2010
(51) Int. Cl.: C10L 5/44, C10B 53/02, C10G 1/00

(54) **Verfahren zum Behandeln von Reststoffen von Brauereien**

(30) Priorität: 18.05.2009 DE 102009021692
(71) Anmelder: Ziemann Energy GmbH, 71636 Ludwigsburg (DE)
(72) Erfinder: Härtl, Maximilian, Dr.-Ing., 71638 Ludwigsburg (DE); Wüst, Oliver, Dipl.-Ing., 88131 Lindau (DE)
(74) Vertreter: Kastner, Hermann

(57) **Zusammenfassung**

Die Verfahren und Vorrichtungen dienen dazu, Reststoffe von Brauereien, insbesondere Biertreber, zu behandeln, und zwar durch eine sogenannte Hydrothermale Carbonisierung. Dazu werden die Reststoffe zusammen mit den erforderlichen Katalysatoren in ein Reaktionsgefäß eingebracht. Den Reststoffen im Reaktionsgefäß wird Wärmeenergie zugeführt und ein für die Reaktion erforderlicher Druck erzeugt, so dass die Reaktion in Gang kommt. Die im Verlaufe der exothermen Reaktion entstehende überschüssige Reaktions-wärmeenergie wird aus dem Reaktionsgefäß abgeführt. Die Reststoffe werden mittels einer Druckschleuse nach und nach in das Reaktionsgefäß eingebracht und nach Beendigung der Reaktion werden die Reaktionsprodukte mittels einer Druck-schleuse nach und nach aus dem Reaktionsgefäß ausgebracht, und zwar jeweils in der Weise, dass im Reaktionsgefäß der für den Ablauf der Reaktion erforderliche Überdruck auf-rechterhalten bleibt. Die Reststoffe können mittels einer Druckschleuse ohne eigene Druckwirkung in das Reaktionsgefäß eingebracht und der erforderlicher Druck im Reaktionsgefäß durch die Reaktion erzeugt werden oder die Reststoffe können mittels einer Druckschleuse mit eigener Druckwirkung schon mit dem für die Reaktion erforderlicher Überdruck in das Reaktionsgefäß eingebracht werden.

## Beschreibung

Bei der Bierherstellung bilden die unvermeidlich in großen Mengen anfallenden nassen Biertreber ein Entsorgungsproblem. Pro Hektoliter Bier fallen etwa 20 kg nasse Biertreber an, so dass bei Großbrauereien hunderte Tonnen Biertreber pro Woche zu entsorgen bzw. zu verwerten sind.

Zwar sind Biertreber aufgrund ihrer Zusammensetzung ein wertvolles Futtermittel. Es wird jedoch zunehmend schwieriger, die Biertreber günstig als Futtermittel einzusetzen. Hinzu kommt, dass man Biertreber nicht ohne Vortrocknung lagern kann, da keine chemisch/biologische Stabilität gegeben ist.

Eine solche Trocknung ist teuer, da aufgrund der Anforderungen an das Futtermittel nur eine indirekte Trocknung möglich ist. Entsprechende Trockner sind teuer und der Energieaufwand ist hoch. Ein Haltbarmachen der Biertreber durch Fermentation bringt wiederum den Nachteil mit sich, dass mit hohen Kosten zu rechnen ist (Brauwelt Nr. 39 (1991), Seiten 1704 - 1707).

Für eine herkömmliche Kompostierung der Biertreber spricht zwar, dass ein hochwertiges Produkt zur Bodenverbesserung gebildet wird, jedoch ist der Absatzmarkt nur klein und die Bearbeitung so kostenintensiv, dass sie nicht kostendeckend ist. Zudem werden beim Prozess des Kompostierens Treibhausgase (N₂O, CH₄, CO₂) freigesetzt, die zu einer zusätzlichen Klimabelastung führen würden.

Seit 1. Juni 2005 wurde die Entsorgungssituation in Deutschland in soweit verschärft, als durch den Gesetzgeber zur Deponierung zukünftig nur noch mineralische Abfälle mit Kohlenstoffgehalten < 5 % zugelassen sind (Deponieverwertungsverordnung vom 25. Juli 2005 (BGB1. I S. 2252).

Biertreber eignen sich grundsätzlich auch zur Herstellung von Biogas. Jedoch sind hierzu hohe Investitionskosten für eine Biogasanlage nötig, da die Anlage aufgrund der langen Verweilzeiten entsprechend groß dimensioniert werden muss. Zudem bleibt auch nach der anaeroben Fermentation ein Gärrest übrig, den es zu entsorgen gilt, so dass durch dieses Verfahren allein keine vollständige Entsorgung gewährleistet ist.

Bei einer thermische Verwertung von Trebern durch Verbrennen bildet der hohe Ausgangsgehalt an Wasser das Problem. Nasstreber bestehen nur zu ca. 20 % aus Trockensubstanz, weshalb der Ausgangsstoff ohne vorherige Aufbereitung nicht brennbar ist. Der hohe Wasseranteil führt obendrein zu einem relativ hohen spezifischen Gewicht, was den Transport dieser Reststoffe aufwändig und problematisch macht. Zudem sind Teile des nassen Materials chemisch/biologisch instabil, weshalb es nur sehr beschränkt lagerfähig ist. Für eine solche Verbrennung ist in der EP 1 007 884 B1 eine aufwändige Aufbereitung der nassen Reststoffe beschrieben. Neben einer mechanischen Behandlung (Abpressen) muss eine thermische Behandlung (Trocknung) erfolgen, um die Reststoffe lagerfähig und brennbar zu machen.

Für die Verfahrensschritte Pressen und Trocknen sind technisch aufwändige Geräte nötig. Neben den hohen Investitions- und Unterhaltskosten haben beide Aggregate einen erheblichen Energiebedarf. Zusätzlich ist Reinigungswasser für die Presse sowie eine thermischen Energiequelle für den Trockner nötig. Aufgrund der Verbrennungseigenschaften von Trebern entstehen zusätzlich technische Anforderungen an den Kessel.

Der Erfindung liegt die Aufgabe zugrunde, ein kontinuierliches Verfahren zum Behandeln von Reststoffen von Brauereien, insbesondere von Biertrebern, anzugeben, das einen geringeren Investitionsaufwand und einen geringeren Energieaufwand als die bekannten Verfahren erfordert. Diese Aufgabe wird durch ein Verfahren mit den in Anspruch 1 oder in Anspruch 2 angegebenen Verfahrenschritten gelöst.

Dadurch, dass die zu behandelnden Reststoffe zunächst in einem Sammelbehälter zusammengeführt werden und von dort aus zusammen mit den erforderlichen Katalysatoren in das Reaktionsgefäß eingebracht werden, und dadurch, dass dem Reaktionsgefäß die für die Umwandlung der Reststoffe erforderliche Wärmeenergie zugeführt wird, bis im Reaktionsgefäß durch Dampfbildung der für die Einleitung und Aufrechterhaltung der Reaktion erforderliche Reaktionsdruck erzeugt wird, setzt in der Masse im Reaktionsgefäß in Folge des Reaktionsdruckes und der Reaktionstemperatur ein Umwandlungsprozess ein, bei dem die Reststoffe allmählich in ihre Grundbestandteile Kohlenstoff und Wasser zerlegt werden. Dieser Prozess wird auch Hydrothermale Carbonisierung (HTC) genannt. Dadurch, dass die Reststoffe über eine Druckschleuse bei der Einlassöffnung des Reaktionsgefäßes in dieses nach und nach eingebracht werden, und dadurch, dass die Reaktionsprodukte bei der Auslassöffnung über eine Druckschleuse nach und nach aus dem Reaktionsgefäß ausgebracht werden, werden im Reaktionsgefäß die anfänglich eingebrachten Reststoffe durch die nachfolgend eingebrachten Reststoffe von der Einlassöffnung weg in Richtung zur Ausgangsöffnung hin bewegt und dabei nach und nach dem Umwandlungsprozess unterzogen. Auf diese Weise werden die Reststoffe stetig in Reaktionsprodukte umgewandelt. Das Reaktionsgefäß und alle mit ihm zusammenwirkenden Geräteteile sind in ständigem Einsatz. Es treten keine Wartezeiten oder Stillstandszeiten und damit verbundene Abkühlverluste auf, so dass die größtmögliche Wirtschaftlichkeit erreicht wird, zumal die Investitionskosten für das Reaktionsgefäß und die mit ihm zusammenwirkenden Geräte geringer als bei den herkömmlichen Anlagen sind. Der Energieaufwand für die Druckschleusen an der Einlassöffnung und an der Auslassöffnung des Reaktionsgefäßes ist verhältnismäßig gering. Weil der Umwandlungsprozess im Reaktionsgefäß stark exotherm verläuft, entsteht im Verlaufe der Reaktion ein Überschuss an Reaktionswärmeenergie, die aus dem Reaktionsgefäß abgeführt werden muss und die dem Energieverbund der Gesamtanlage, also der Brauerei, zugeführt werden kann. Dadurch erhöht sich die Wirtschaftlichkeit des Verfahrens zusätzlich gegenüber den herkömmlichen Verfahren.

Dadurch, dass bei dem Verfahren nach Anspruch 2 die Reststoffe nicht mittels einer Druckschleuse, sondern mittels einer Förderpumpe von Anfang an mit dem Reaktionsdruck in das Reaktionsgefäß eingebracht werden, kann im Reaktionsgefäß der Umwandlungsprozess sofort beginnen. Selbst wenn die Förderpumpe einen größeren Energiebedarf als die Druckschleuse haben sollte, wird das dadurch ausgeglichen, dass die Förderpumpe hinsichtlich der Fördermenge und vor allem hinsichtlich des Förderdruckes leichter geregelt werden kann und dadurch eher ein optimaler Ablauf des Umwandlungsprozesses erreicht werden kann, als bei dem Einsatz einer Druckschleuse. Bei einer Ausgestaltung des Verfahrens nach Anspruch 3 können die festen und die flüssigen Reaktionsprodukte getrennt voneinander weiterbehandelt, das heißt verwertet werden.

Durch eine Ausgestaltung des Verfahrens nach Anspruch 4 fallen die festen und flüssigen Reaktionsprodukte getrennt an, wobei der Überdruck im Reaktionsgefäß den Trennvorgang begünstigt.

Bei einer Ausgestaltung des Verfahrens nach Anspruch 5 können die Reaktionsprodukte weitgehend unter Reaktionsdruck weiteren Behandlungen unterzogen werden, insbesondere solche, die unter Überdruck günstiger ablaufen.

Bei einer Ausgestaltung des Verfahrens nach Anspruch 6 wird der Aufwand für die spätere Trennung der festen und flüssigen Reaktionsprodukte verringert.

Durch eine Ausgestaltung des Verfahrens nach Anspruch 7 wird vermieden, dass die neu eingebrachten Reststoffe die Temperatur im Reaktionsgefäß absenken, wodurch der Umwandlungsprozess beeinträchtigt werden könnte. Mit der Weiterbildung des Verfahrens nach Anspruch 8 wird einerseits die in den Reaktionsprodukten vorhandene Wärmeenergie für die Erwärmung der noch zu behandelnden Reststoffe genutzt und andererseits eine gesonderte Abkühlung der Reaktionsprodukte eingespart. Bei einer Weiterbildung nach Anspruch 9 wird die bei der Reaktion im Reaktionsgefäß ohnehin anfallende Reaktionswärmeenergie zum Vorwärmen oder Aufheizen der Reststoffe herangezogen.

Bei einer Ausgestaltung des Verfahrens nach Anspruch 10 oder 11 können die Reaktionsprodukte unabhängig voneinander und gemäß ihren spezifischen Eigenschaften weiter verarbeitet werden.

Bei einer Ausgestaltung des Verfahrens nach Anspruch 12 wird die vom Reaktionsgefäß aufzunehmende Durchsatzmenge der Restprodukte bereits vorher vermindert.

Eine Ausgestaltung des Verfahrens nach Anspruch 13 oder Anspruch 14 kommt dem Energieverbund der Brauerei zugute.

Der Erfindung liegt auch die Aufgabe zugrunde, Vorrichtungen anzugeben, mit deren Hilfe die zuvor geschilderten Verfahren besonders günstig durchgeführt werden können.

Diese Aufgabe wird hinsichtlich des Verfahrens nach Anspruch 1 durch eine Vorrichtung nach Anspruch 15 gelöst. Hinsichtlich des Verfahrens nach Anspruch 2 wird diese Aufgabe durch eine Vorrichtung nach Anspruch 16 gelöst.

Dadurch, dass bei der Vorrichtung nach Anspruch 15 bei der Einlassöffnung des Reaktionsgefäßes eine Druckschleuse vorhanden ist, kann nach dem Einbringen der ersten Reststoffe infolge der Zuführung einer ausreichenden Reaktionswärmeenergie und des daraufhin einsetzenden exothermen Umwandlungsprozesses der Inhalt des Reaktionsgefäßes auf Reaktionstemperatur und dadurch wiederum auf Reaktionsdruck gebracht werden, die auch bei weiterem Einbringen von Reststoffen aufrecht erhalten werden. Dadurch, dass bei der Auslassöffnung des Reaktionsgefäßes eine Druckschleuse vorhanden ist, können die im Reaktionsgefäß stetig anfallenden Reaktionsprodukte ohne Druckabfall im Reaktionsgefäß aus diesem ausgebracht werden.

Dadurch, dass bei der Vorrichtung nach Anspruch 16 bei der Einlassöffnung des Reaktionsgefäßes eine Förderpumpe vorhanden ist, können die Reststoffe von Anfang an stetig mit Reaktionsdruck in das Reaktionsgefäß eingebracht werden, so dass bei entsprechender Wärmeenergiezufuhr der Umwandlungsprozess der Reststoffe sofort beginnen kann und er durch die stetige Zufuhr weiterer Reststoffe aufrecht erhalten werden kann.

Bei einer Ausgestaltung der Vorrichtung nach Anspruch 17 können die festen und die flüssigen Reaktionsprodukte bereits beim Ausbringen aus dem Reaktionsgefäß voneinander getrennt werden und getrennt weiterbehandelt, insbesondere verwertet werden.

Bei einer Ausgestaltung der Vorrichtung nach Anspruch 18 können die Reaktionsprodukte einer weiteren Behandlung unterzogen werden, während sie weitgehend noch unter dem Reaktionsdruck stehen.

Bei einer Ausgestaltung der Vorrichtung nach Anspruch 19 kann zumindest ein Teil der flüssigen Reaktionsprodukte vorab ausgebracht werden.

Durch eine Ausgestaltung der Vorrichtung nach Anspruch 20 können die in das Reaktionsgefäß einzubringenden Reststoffe auf eine höhere Temperatur gebracht werden, wobei dafür die Wärmeenergie der Reaktionsprodukte und/oder die Wärmeenergie einer sonstigen Wärmequelle, insbesondere die aus dem Reaktionsgefäß abgeleitete überschüssige Reaktionswärmeenergie, genutzt werden.

Bei einer Ausgestaltung der Vorrichtung nach Anspruch 21 oder Anspruch 22 lassen sich die festen und flüssigen Reaktionsprodukte entsprechend ihren spezifischen Eigenschaften voneinander trennen.

Bei einer Ausgestaltung der Vorrichtung nach Anspruch 23 lassen sich die Reststoffe in kleinen Teilmengen in das Reaktionsgefäß einbringen, wobei die dabei auftretende geringfügige Druckminderung im Reaktionsgefäß durch den in der neuen Teilmenge alsbald einsetzenden Umwandlungsprozess schnell wieder ausgeglichen wird.

Bei einer Ausgestaltung der Vorrichtung nach Anspruch 24 können die Reststoffe stetig in das Reaktionsgefäß eingebracht werden, wobei sie von Anfang an unter Reaktionsdruck stehen und der Umwandlungsprozess der neu eingebrachten Reststoffe sofort einsetzen kann.

Bei einer Ausgestaltung der Vorrichtung nach Anspruch 25 können die Reaktionsprodukte unter Aufrechterhaltung des Reaktionsdruck im Reaktionsgefäß aus diesem stetig ausgebracht werden, wobei der austretende Mengenstrom der Reaktionsprodukte so gesteuert wird, dass er der Differenz des bei der Einlassöffnung des Reaktionsgefäßes eingebrachten Mengenstromes und des während der Verweildauer der Reststoffe bzw. der Reaktionsprodukte anderweitig aus dem Reaktionsgefäß abgeführten Mengenstromes entspricht.

Bei einer Ausgestaltung der Vorrichtung nach Anspruch 26 erfordert das Reaktionsgefäß nur eine verhältnismäßig kleine Grundfläche. Durch die Ausstattung mit einem Rührwerk wird die Gefahr vermindert, dass sich im Reaktionsgefäß Toträume und/oder Kurzschlussströme ausbilden und dadurch in einzelnen Teilmengen der zu behandelnden Stoffe der Umwandlungsprozess in unterschiedlicher Weise abläuft.

Bei einer Ausgestaltung der Vorrichtung nach Anspruch 27 hat das Reaktionsgefäß zwar einen größeren Grundflächenbedarf, dafür aber eine geringere Bauhöhe. Durch die Ausstattung mit einem Rührwerk wird im Reaktionsgefäß wiederum vermieden, dass sich Toträume oder Kurzschlussströme ausbilden und sich auf den Umwandlungsprozess ungünstig auswirken. Das wird bei einer Weiterbildung der Vorrichtung nach Anspruch 28 in besonders günstiger Weise erreicht.

Bei einer Ausgestaltung der Vorrichtung nach Anspruch 29 ist es möglich, die bei den Umwandlungsprozessen entstehenden gasförmigen Reaktionsprodukte an einer vorgegebenen Stelle zu sammeln und getrennt von den übrigen Reaktionsprodukten gezielt aus dem Reaktionsgefäß auszubringen.

Mit einer Ausgestaltung der Vorrichtung nach Anspruch 30 können die festen Reaktionsprodukte, die im Allgemeinen als pulverförmiger Kohlenstoff anfallen und die nach der Trennvorrichtung noch eine gewisse Restfeuchte enthalten, in dem Trockner soweit getrocknet werden, dass sie in einer Feuerung verbrannt werden können und dadurch dem Energiesystem der Brauerei Wärmeenergie zuführen.

Bei einer Weiterbildung der Vorrichtung nach Anspruch 31 wird erreicht, dass derjenige Feststoffanteil, der durch das Trocknungsmittel aus dem Trockner ausgetragen wird, zuverlässig aus dem Trocknungsmittel entfernt wird, so dass das Trocknungsmittel ins Freie ausgeblasen werden kann.

Im Folgenden wird die Erfindung anhand mehrerer in der Zeichnung dargestellter Ausführungsbeispiele näher erläutert. Es zeigen:
- Fig. 1 und Fig. 2: je eine schematische Darstellung einer ersten und einer zweiten Vorrichtung zum Behandeln von Reststoffen, mit zum Teil gemeinsam genutzten Vorrichtungsteilen;
- Fig. 3: eine schematische Darstellung eines dritten Aus- führungsbeispieles der Vorrichtung;
- Fig. 4: eine schematische Darstellung eines vierten Aus- führungsbeispieles der Vorrichtung;
- Fig. 5: eine schematische Darstellung eines fünften Aus- führungsbeispieles der Vorrichtung.

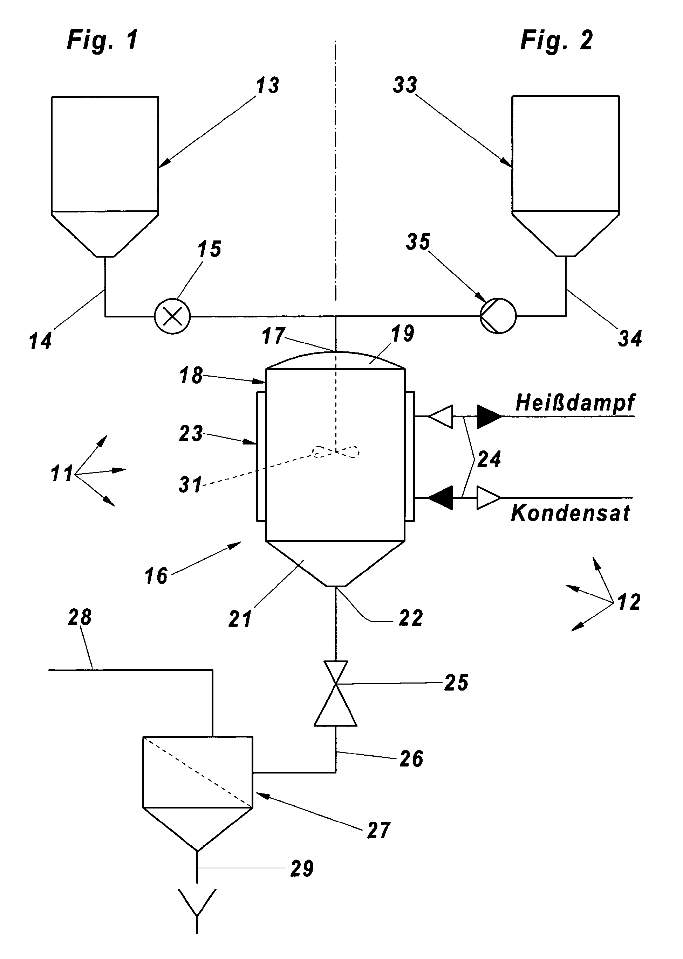

Fig. 1 zeigt eine erste Vorrichtung 11 zum Behandeln von Reststoffen von Brauereien, insbesondere von Biertrebern, und Fig. 2 eine zweite derartige Vorrichtung 12, bei denen die individuell gestalteten Vorrichtungsteile getrennt voneinander und die übereinstimmenden Vorrichtungsteile nur einmal gemeinsam dargestellt sind.

Die Vorrichtung 11 weist einen Sammelbehälter 13 auf, in dem die zu behandelnden Reststoffe, insbesondere nasse Biertreber, gesammelt werden. Über eine Rohrleitung 14 werden die Reststoffe durch eine Druckschleuse 15 hindurch in ein Reaktionsgefäß 16 eingebracht. Die Druckschleuse 15 ist der besseren Übersicht wegen in einem gewissen Abstand vom Reaktionsgefäß 16 dargestellt. In Wirklichkeit ist sie in unmittelbarer Nähe einer Einlassöffnung 17 des Reaktionsgefäßes 16 angeordnet.

Die Druckschleuse 15 kann beispielsweise als Zellradschleuse ausgebildet sein, die von einem Motor angetrieben wird, der mit einer Steuerung gekoppelt ist. Mittels der Zellradschleuse werden die Reststoffe in kleinen Teilmengen in das Reaktionsgefäß 16 eingebracht.

Das Reaktionsgefäß 16 weist einen zylindrischen Grundörper 18 auf, der vertikal ausgerichtet ist. Am oberen Ende des Grundkörpers 18 ist ein konkav gewölbter Deckel 19 angeordnet, der mit dem Grundkörper lösbar aber dicht verbunden ist. Am unteren Ende des Grundkörpers 18 schließt ein kegelförmiger oder zumindest kegelstumpfförmiger Auslasstrichter 21 mit einer Auslassöffnung 22 an.

Das Reaktionsgefäß 16 ist für einen Reaktionsdruck von wenigstens 10 bar ausgelegt. Das Reaktionsgefäß 16 ist mit einem Wärmeübertragungselement ausgerüstet, der kurz als Wärmeübertrager 23 bezeichnet wird. Dieser Wärmeübertrager 23 ist als außen gelegener Mantel des Reaktionsgefäßes 16 dargestellt. Der Wärmeübertrager kann auch auf der Innenseite des Reaktionsgefäßes 16 oder auch im Innenraum des Reaktionsgefäßes angeordnet sein. Der Wärmeübertrager 23 kann über Rohrleitungen 24 wahlweise entweder mit einer Wärmeenergiequelle oder mit einer Wärmeenergiesenke verbunden werden, je nach den Erfordernissen des im Reaktionsgefäß 16 ablaufenden Umwandlungsprozesses der Reststoffe. Die bei den Rohrleitungen 24 eingezeichneten Hohlpfeile deuten auf den Anfahrzustand hin, bei dem dem Reaktionsgefäß 16 Wärmeenergie zugeführt werden muss, um den Umwandlungsprozess in Gang zu bringen. Die Vollpfeile deuten auf den Dauerzustand hin, bei dem aus dem Reaktionsgefäß 16 überschüssige Reaktionswärmeenergie abgeführt werden muss.

An die Auslassöffnung 22 des Reaktionsgefäßes 16 ist eine Druckschleuse 25 angeschlossen. Diese ist wiederum wegen der besseren Übersicht in einem gewissen Abstand von der Auslassöffnung 22 dargestellt, wobei sie in Wirklichkeit in unmittelbarer Nachbarschaft der Auslassöffnung 22 angeordnet ist. Über die Druckschleuse 25 werden die bei dem Umwandlungsprozess im Reaktionsgefäß 16 anfallenden Reaktionsprodukte aus dem Reaktionsgefäß ausgebracht.

An die Druckschleuse 25 schließt eine Rohrleistung 26 an, die die Reaktionsprodukte einer Vorrichtung zum Trennen der festen und flüssigen Reaktionsbestandteile zuleitet, die im folgenden kurz als Trennvorrichtung 27 bezeichnet wird. Die festen Reaktionsprodukte werden über eine Rohrleitung 28 weitergeleitet und die flüssigen Reaktionsprodukte über eine Leitung 29 abgeleitet.

Die zweite Vorrichtung 12 weist ebenfalls einen Sammelbehälter 23 für die zu behandelnden Reststoffe auf, dessen Funktion gleich der des Sammelbehälters 13 der ersten Vorrichtung 11 ist. Über eine Rohrleitung 34 gelangen die Reststoffe aus dem Sammelbehälter 33 zu einer Förderpumpe 35, mittels der die Reststoffe aus dem Sammelbehälter 33 in das daran angeschlossene Reaktionsgefäß 16 eingebracht werden.

Die Förderpumpe 35 ist im Hinblick auf die Natur der Reststoffe als Dickstoffpumpe ausgebildet und zwar vorzugsweise als Doppelspindelpumpe. Die Förderpumpe 35 ist so ausgelegt, dass sie die Reststoffe in das Reaktionsgefäß 16 mit einem Überdruck einbringt, der mindestens gleich dem Reaktionsdruck im Reaktionsgefäß 16 ist, der für den ordnungsgemäßen Ablauf des Umwandlungsprozesses im Reaktionsgefäß 16 erforderlich ist. Dieser Reaktionsdruck beträgt zumindest annähernd 10 bar. Damit kann im Reaktionsgefäß 16 eine Reaktionstemperatur von zumindest annähernd 200° C erzeugt und aufrechterhalten werden, so das zusammen mit dem Reaktionsdruck eine vollständige Umwandlung der eingebrachten Reststoffe in ihre Grundbestandteile Kohlenstoff und Wasser erreicht wird.

Das Reaktionsgefäß 16 und seine Teile, sowie die mit ihm zusammenwirkenden Vorrichtungsteile sind gleich denen ausgebildet und angeordnet, die zuvor in Verbindung mit der Vorrichtung 11 erläutert worden sind.

Im Innenraum des Reaktionsgefäßes 16 ist gestrichelt ein Rührwerk 31 angedeutet, das den Inhalt des Reaktionsgefäßes 16 in ständiger Bewegung halten soll, damit sowohl Toträume, wie auch Kurzschlussströme innerhalb des Reaktionsgefäßes 16 vermieden werden. Zweckmäßigerweise ist das Rührwerk 31 so ausgebildet, dass es auf den Inhalt des Reaktionsgefäßes 16 eine gewisse Förderwirkung in Richtung auf die Auslassöffnung 22 hin ausüben kann.

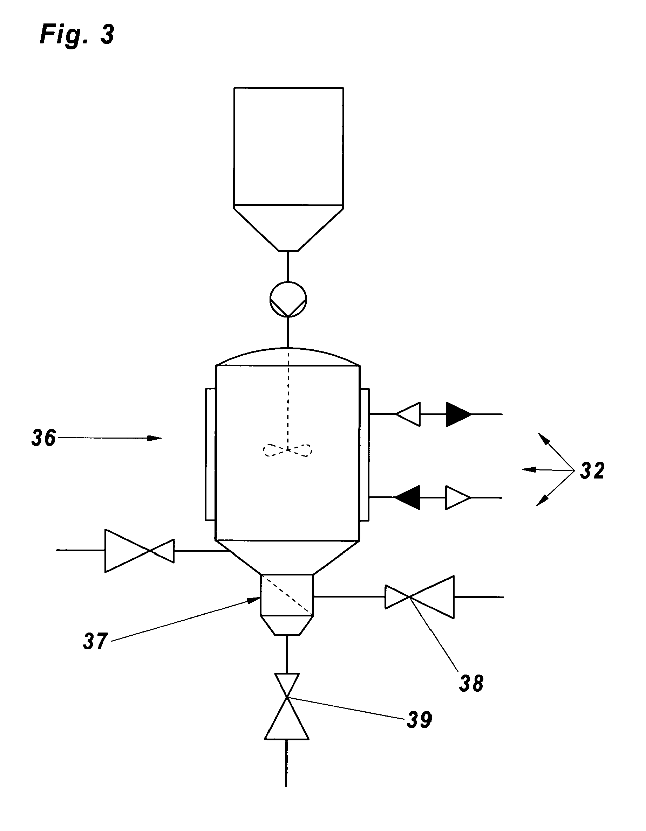

Aus Fig. 3 ist eine gegenüber Fig. 2 abgewandelte Ausführungsform der Vorrichtung zu ersehen. Die Abwandlung der dritten Vorrichtung 32 besteht darin, dass das Reaktionsgefäß 36 im Bereich seiner Auslassöffnung eine Trennvorrichtung 37 zum Trennen der festen und flüssigen Reaktionsprodukte aufweist. An die Trennvorrichtung 37 schließt eine Druckschleuse 38 für die festen Reaktionsprodukte und eine Druckschleuse 39 für die flüssigen Reaktionsprodukte an. Dadurch, dass die Trennvorrichtung 37 im Verbund des Drucksystems angeordnet ist, kann beim Trennvorgang der im Reaktionsgefäß 36 herrschende Reaktionsdruck dafür genutzt werden, die Trennung der festen und flüssigen Reaktionsprodukte zu unterstützen. Als noch weitergehende Abwandlung kommt in Betracht, die Trennvorrichtung 37 so auszugestalten, dass sie zugleich als Druckschleuse für die festen und die flüssigen Reaktionsprodukte wirken kann, oder umgekehrt die Druckschleusen so auszugestalten, dass sie zugleich als Trennvorrichtung wirken können.

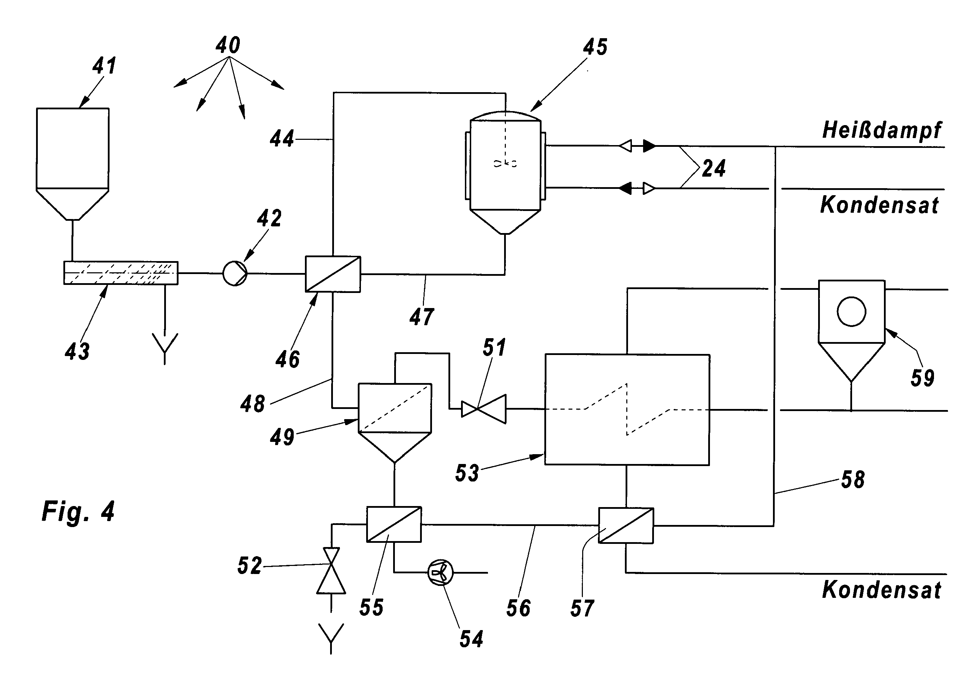

Bei der Ausführungsform nach Fig. 4 sind gegenüber der Ausführungsform nach Fig. 2 eine ganze Reihe zusätzlicher Abwandlungen dargestellt.

Bei der vierten Vorrichtung 40 ist zwischen dem Sammelbehälter 41 und der Förderpumpe 42 eine Schneckenpresse 43 zwischengeschaltet. Sie dient dazu, die Reststoffe wenigstens zum Teil zu entwässern, ehe sie über die Rohrleitung 44 in das Reaktionsgefäß stetig eingebracht werden.

Auf dem Weg zwischen der Förderpumpe 42 und dem Reaktionsgefäß 45 werden die Reststoffe durch einen Wärmeübertrager 46 hindurchgeleitet, der auf der anderen Seite über die Rohrleitung 47 von den aus dem Reaktionsgefäß 45 austretenden Reaktionsprodukten durchflossen wird. Dadurch werden einerseits die Reststoffe auf eine höhere Temperatur gebracht, die der Reaktionstemperatur im Reaktionsgefäß 45 nahe kommt und andererseits werden dadurch die Reaktionsprodukte aus dem Reaktionsgefäß 45 abgekühlt. Erst danach werden sie über eine Rohrleitung 48 in die Trennvorrichtung 49 eingeleitet, in der die festen und die flüssigen Reaktionsprodukte voneinander getrennt werden. Die festen Reaktionsprodukte werden über eine Druckschleuse 51 und die flüssigen Bestandteile über eine Druckschleuse 52 aus dem Drucksystem ausgebracht.

Da die festen Reaktionsprodukte, die ganz überwiegend als pulverförmiger Kohlenstoff anfallen, nach der Trennvorrichtung 49 und der Druckschleuse 51 noch eine gewisse Restfeuchte aufweisen, werden sie im Hinblick auf eine einfache und bessere Verwertung, etwa durch Verbrennen, durch einen Trockner 53 hindurchgeleitet. Dieser Trockner 53 ist als Niedertemperaturtrockner ausgebildet, wenn als Trocknungsmittel die Umgebungsluft verwendet wird. Dabei muss ihre Temperatur unterhalb des Flammpunktes der festen Reaktionsprodukte gehalten werden. Sie wird von einem Gebläse 54 durch einen Wärmeübertrager 55 hindurch geleitet, der auf der anderen Seite von den flüssigen Reaktionsprodukten aus der Trennvorrichtung 49 durchströmt wird. Die Trocknungsluft wird vom Wärmeübertrager 55 aus über eine Rohrleitung 56 dem Trockner 53 zugeleitet.

Falls die im Wärmeübertrager 55 verfügbare Wärmeenergie die Trocknungsluft nicht ausreichend zu erwärmen vermag, wird in die Rohrleitung 56 ein weiterer Wärmeübertrager 57 eingeschaltet, der über eine Rohrleitung 58 mit Wärmeenergie versorgt wird. Diese Rohrleitung 58 ist zweckmäßiger Weise mit einer der beiden Rohrleitungen 24 verbunden, über die zum Ingangsetzen der Reaktion im Reaktionsgefäß 45 Wärmeenergie zugeführt wird und nachher die überschüssige Reaktionswärmeenergie der exothermen Reaktion abgeführt wird.

Das durch den Trockner 53 hindurchströmende gasförmige Trocknungsmittel reißt unvermeidlich geringe Mengen der festen Reaktionsprodukte in Form von Kohlenstoffstaub mit. Damit dieses Trocknungsmittel, das im Allgemeinen der Umgebungsluft entnommen wird, wieder in die Umgebung entlassen werden kann, muss dieses Trocknungsgas zuvor durch einen Zentrifugalabscheider 59 hindurchgeleitet werden, in dem die Feststoffreste aus dem Trocknungsgas ausgeschieden werden.

Anstelle des Trockners 53, der mit einem Trocknungsgas betrieben wird, kann auch ein Trockner eingesetzt werden, dem die erforderliche Wärmeenergie indirekt zugeführt wird, beispielsweise mittels eines Heizmantels oder mittels Heizschlangen.

Bei der fünften Vorrichtung 61 ist an den Sammelbehälter 62 eine Rohrleitung 63 angeschlossen, über die die Reststoffe aus dem Sammelbehälter 62 zu der Förderpumpe 64 gelangen, mittels der sie mit mindestens Reaktionsdruck in das Reaktionsgefäß 65 eingebracht werden.

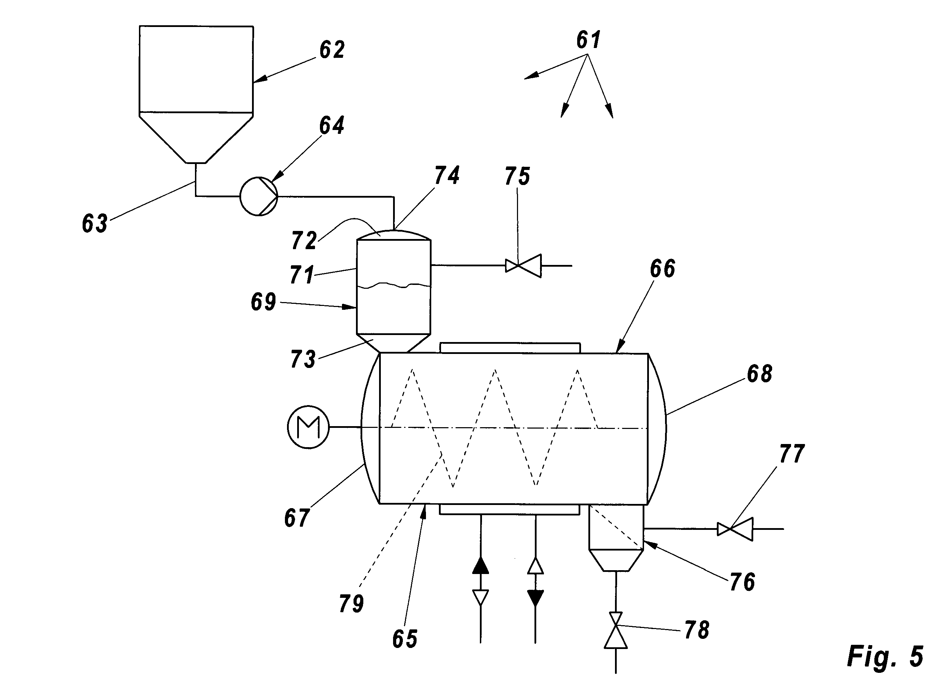

Das Reaktionsgefäß 65 weist einen zylindrischen Grundkörper 66 auf, der horizontal ausgerichtet ist. An den beiden Stirnseiten des Grundkörpers 66 ist je ein konkav gewölbter Deckel 67 bzw. 68 angeordnet, die mit dem Grundkörper lösbar aber dicht verbunden sind. Im Bereich der in Fig. 5 links gelegenen Stirnseite des Reaktionsgefäßes 65 ist im oberen Bereich ihres Umfanges eine nicht dargestellte Einlassöffnung gelegen. An diese Einlassöffnung ist ein Gasdom 69 angeschlossen. Er weist einen zylindrischen Grundkörper 71 auf, der lotrecht ausgerichtet ist. Am oberen Ende des Grundkörpers 71 ist ein konkav gewölbter Deckel 72 angeordnet, der mit dem Grundkörper 71 lösbar aber dicht verbunden ist. Am unteren Ende des Grundkörpers 71 schließt ein kegeliger oder zumindest kegelstumpfförmiger Auslasstrichter 73 an, der an seinem unteren Ende mit dem Grundkörper 66 des Reaktionsgefäßes 65 verbunden ist. Am Deckel 72 ist eine Einlassöffnung 74 angeordnet, die zugleich die Einlassöffnung des Reaktionsgefäßes 65 darstellt. Daran ist die Förderpumpe 64 angeschlossen.

Der Gasdom 69 dient dazu, die im Reaktionsgefäß 65 sich bildenden gasförmigen Reaktionsprodukte an einem vorgegebenen Ort zu sammeln, damit sie von dort aus über eine Druckschleuse 75 entweder stetig oder von Zeit zu Zeit ausgebracht werden können.

Bei der in Fig. 5 rechts gelegenen Stirnseite des Grundkörpers 66 ist an das Reaktionsgefäß 65 eine Trennvorrichtung 76 angeschlossen, von der aus über eine Druckschleuse 77 die festen Reaktionsprodukte und über eine Druckschleuse 78 die flüssigen Reaktionsprodukte ausgebracht werden.

Im Innenraum des Reaktionsgefäßes 65 ist gestrichelt ein Rührwerk 79 angedeutet, das bevorzugt als Förderschnecke ausgebildet ist und mit einem Antriebsmotor M gekoppelt ist. Dieses Rührwerk 79 sorgt dafür, dass im Innenraum des Reaktionsgefäßes 65 sich keine Toträume und/oder Kurzschlussströme ausbilden, die den gleichmäßigen Ablauf des Umwandlungsprozesses in den einzelnen Bereichen des Innenraumes beeinträchtigen könnten.

### Bezugszeichenliste

- 11: erste Vorrichtung
- 12: zweite Vorrichtung
- 13: Sammelbehälter
- 14: Rohrleitung
- 15: Druckschleuse
- 16: Reaktionsgefäß
- 17: Einlassöffnung
- 18: Grundkörper
- 19: Deckel

- 21: Auslasstrichter
- 22: Einlassöffnung
- 23: Wärmeübertrager
- 24: Rohrleitung
- 25: Druckschleuse
- 26: Rohrleitung
- 27: Trennvorrichtung
- 28: Rohrleitung
- 29: Rohrleitung

- 31: Rührwerk
- 32: dritte Vorrichtung
- 33: Sammelbehälter
- 34: Rohrleitung
- 35: Förderpumpe
- 36: Reaktionsgefäß
- 37: Trennvorrichtung
- 38: Druckschleuse
- 39: Druckschleuse

- 40: vierte Vorrichtung
- 41: Sammelbehälter
- 42: Förderpumpe
- 43: Schneckenpresse
- 44: Rohrleitung
- 45: Reaktionsgefäß
- 46: Wärmeübertrager
- 47: Rohrleitung
- 48: Rohrleitung
- 49: Trennvorrichtung

- 51: Druckschleuse
- 52: Druckschleuse
- 53: Trockner
- 54: Gebläse
- 55: Wärmeübertrager
- 56: Rohrleitung
- 57: Wärmeübertrager
- 58: Rohrleitung
- 59: Partikelabscheider
- 61: fünfte Vorrichtung
- 62: Sammelbehälter
- 63: Rohrleitung
- 64: Förderpumpe
- 65: Reaktionsgefäß
- 66: Grundkörper
- 67: Deckel
- 68: Deckel
- 69: Gasdom

- 71: Grundkörper
- 72: Deckel
- 73: Auslasstrichter
- 74: Einlassöffnung
- 75: Druckschleuse
- 76: Trennvorrichtung
- 77: Druckschleuse
- 78: Druckschleuse
- 79: Rührwerk

## Patentansprüche

1. Verfahren zum Behandeln von Reststoffen von Brauereien, insbesondere von Biertrebern,
mit den Verfahrensschritten:
- die zu behandelnden Reststoffe werden in einem Sammelbehälter (13) zusammengeführt,
- die Reststoffe aus dem Sammelbehälter (13) werden in ein Reaktionsgefäß (16) verbracht,
- in das Reaktionsgefäß (16) werden die erforderlichen Katalysatoren eingebracht,
- den Reststoffen im Reaktionsgefäß (16) wird Wärmeenergie zugeführt, bis die Reaktion in Gang kommt und in Gang bleibt,
- im Reaktionsgefäß (16) wird ein für die Durchführung der Reaktion erforderlicher Überdruck (Reaktionsdruck) erzeugt,
- die im Verlaufe der Reaktion entstehende überschüssige Reaktionswärmeenergie wird aus dem Reaktionsgefäß (16) in der Weise abgeführt, dass darin die für die Aufrechterhaltung der Reaktion erforderliche Temperatur (Reaktionstemperatur) gehalten wird,
- nach dem Abschluss der Reaktion werden die Reaktionsprodukte aus dem Reaktionsgefäß (16) ausgebracht,
**gekennzeichnet durch** die Verfahrensschritte:
- Reststoffe aus dem Sammelbehälter (13) werden über eine Druckschleuse (15) bei der Einlassöffnung (17) des Reaktionsgefäßes (16) in dieses nach und nach eingebracht,
- im Reaktionsgefäß (16) werden die anfänglich eingebrachten Reststoffe **durch** die nachfolgend eingebrachten Reststoffe von der Einlassöffnung (17) weg in Richtung zur Auslassöffnung (22) hin bewegt und dabei nach und nach dem Umwandlungsprozess unterzogen,
- die Reaktionsprodukte werden bei der Auslassöffnung (22) des Reaktionsgefäßes (16) über eine Druckschleuse (25) nach und nach aus dem Reaktionsgefäß (16) in der Weise ausgebracht, dass der Reaktionsdruck im Reaktionsgefäß (16) aufrechterhalten wird.

2. Verfahren zum Behandeln von Reststoffen von Brauereien, insbesondere von Biertrebern,
mit den Verfahrensschritten:
- die zu behandelnden Reststoffe werden in einem Sammelbehälter (33) zusammengeführt,
- die Reststoffe aus dem Sammelbehälter (33) werden in ein Reaktionsgefäß (16) verbracht,
- in das Reaktionsgefäß (16) werden die erforderlichen Katalysatoren eingebracht,
- den Reststoffen im Reaktionsgefäß (16) wird Wärmeenergie zugeführt, bis die Reaktion in Gang kommt und in Gang bleibt,
- die im Verlaufe der Reaktion entstehende überschüssige Reaktionswärmeenergie wird aus dem Reaktionsgefäß (16) in der Weise abgeführt, dass darin die für die Aufrechterhaltung der Reaktion erforderliche Temperatur (Reaktionstemperatur) gehalten wird,
- nach dem Abschluss der Reaktion werden die Reaktionsprodukte aus dem Reaktionsgefäß (16) ausgebracht,
**gekennzeichnet durch** die Verfahrensschritte:
- Reststoffe aus dem Sammelbehälter (33) werden mittels einer Förderpumpe (35) mit Reaktionsdruck nach und nach in das Reaktionsgefäß (16) eingebracht,
- im Reaktionsgefäß (16) werden die anfänglich eingebrachten Reststoffe **durch** die nachfolgend eingebrachten Reststoffe von der Einlassöffnung (17) weg in Richtung zur Auslassöffnung (22) hin bewegt und dabei nach und nach den Behandlungsvorgängen unterzogen,
- die Reaktionsprodukte werden bei der Auslassöffnung (22) des Reaktionsgefäßes (16) über eine Druckschleuse (25) nach und nach aus dem Reaktionsgefäß (16) in der Weise ausgebracht, dass im Reaktionsgefäß (16) der Reaktionsdruck aufrechterhalten wird.

3. Verfahren nach Anspruch 1 oder 2,
**gekennzeichnet durch** den Verfahrensschritt:
- die festen und die flüssigen Reaktionsprodukte werden außerhalb des Reaktionsgefäßes (16) zumindest zum Teil voneinander getrennt.

4. Verfahren nach Anspruch 1 oder 2,
**gekennzeichnet durch** den Verfahrensschritt:
- die Reaktionsprodukte werden über eine Vorrichtung (27) zum Trennen der festen und der flüssigen Reaktionsprodukte aus dem Reaktionsgefäß (16) in der Weise ausgebracht, dass im Reaktionsgefäß (16) der Reaktionsdruck aufrechterhalten wird.

5. Verfahren nach Anspruch 1 oder 2,
**gekennzeichnet durch** den Verfahrensschritt:
- die Reaktionsprodukte aus dem Reaktionsgefäß (16) werden einem oder mehreren weiteren Verfahrensschritten unterzogen, ehe sie in der Weise ausgebracht werden, dass im Reaktionsgefäß (16) der Reaktionsdruck aufrechterhalten wird.

6. Verfahren nach Anspruch 1 oder 2,
**gekennzeichnet durch** den Verfahrensschritt:
- von den bei der Reaktion entstehenden flüssigen Reaktionsprodukten wird wenigstens ein vorgegebener Anteil aus dem Reaktionsgefäß (16) in der Weise ausgebracht, dass im Reaktionsgefäß (16) der Reaktionsdruck aufrechterhalten wird.

7. Verfahren nach Anspruch 1 oder 2,
**gekennzeichnet durch** den Verfahrensschritt:
- die zu behandelnden Reststoffe werden vor dem Einbringen in das Reaktionsgefäß (16) mittels eines Wärmeübertragers (46) auf eine höhere Temperatur gebracht.

8. Verfahren nach Anspruch 7,
**gekennzeichnet durch** den Verfahrensschritt:
- die Wärmeenergie für den Wärmeübertrager (46) wird wenigstens zum Teil der Wärmeenergie der Reaktionsprodukte entnommen.

9. Verfahren nach Anspruch 7,
**gekennzeichnet**durch den Verfahrensschritt:
- die Wärmeenergie für den Wärmeübertrager (46) wird wenigstens zum Teil der überschüssigen Reaktionswärmeenergie aus dem Reaktionsgefäß (45) entnommen.

10. Verfahren nach Anspruch 1 oder 2,
**gekennzeichnet durch** den Verfahrensschritt:
- die festen und flüssigen Reaktionsprodukte werden in einer mechanischen Trennvorrichtung (27) voneinander getrennt.

11. Verfahren nach Anspruch 1 oder 2,
**gekennzeichnet durch** den Verfahrensschritt:
- die festen und flüssigen Reaktionsprodukte werden thermisch voneinander getrennt.

12. Verfahren nach Anspruch 1 oder 2,
**gekennzeichnet durch** den Verfahrensschritt:
- die zu behandelnden Reststoffe werden vor dem Einbringen in das Reaktionsgefäß (45) zumindest zum Teil entwässert.

13. Verfahren nach Anspruch 1 oder 2,
**gekennzeichnet durch** den Verfahrensschritt:
- die im Verlaufe der Reaktion entstehende überschüssige Reaktionswärmeenergie wird dem Energieverbund der Brauerei zugeführt.

14. Verfahren nach Anspruch 1 oder 2,
**gekennzeichnet durch** den Verfahrensschritt:
- die Reaktionsprodukte werden zur weiteren Verwertung dem Energieverbund der Brauerei zugeführt.

15. Vorrichtung zum Durchführen des Verfahrens nach Anspruch 1, mit den Merkmalen:
- es ist ein Reaktionsgefäß (16) vorhanden,
- das mindestens mit dem Reaktionsdruck belastbar ist und
- das eine Einlassöffnung (17) und eine Auslassöffnung (22) aufweist,
- das Reaktionsgefäß ( ) weist auf seiner Außenseite und/oder auf seiner Innenseite und/oder in seinem Innenraum wenigstens ein Wärmeübertragungselement (23) (Wärmeübertrager) auf, das sowohl an eine Wärmeenergiequelle wie auch an eine Wärmeenergiesenke anschließbar ist,
**gekennzeichnet durch** die Merkmale:
- an die Einlassöffnung (17) des Reaktionsgefäßes (16) ist eine Druckschleuse (15) angeschlossen, mittels der die zu behandelnden Reststoffe nach und nach in das Reaktionsgefäß (16) mit dem darin herrschenden Reaktionsdruck einbringbar und **dadurch** nach und nach **durch** das Reaktionsgefäß (16) hindurch bis zur Auslassöffnung (22) hin bewegbar sind,
- an die Auslassöffnung (22) des Reaktionsgefäßes (16) ist eine Druckschleuse (25) angeschlossen, mittels der die Reaktionsprodukte unter Beibehaltung des Reaktionsdruckes im Reaktionsgefäß (16) nach und nach aus diesem ausbringbar sind.

16. Vorrichtung zum Durchführen des Verfahrens nach Anspruch 2, mit den Merkmalen:
- es ist ein Reaktionsgefäß (16) vorhanden,
- - das mindestens mit dem Reaktionsdruck belastbar ist und
- - das eine Einlassöffnung (17) und eine Auslassöffnung (22) aufweist,
- das Reaktionsgefäß (16) weist auf seiner Außenseite und/oder auf seiner Innenseite und/oder in seinem Innenraum wenigstens ein Wärmeübertragungselement (23) (Wärmeübertrager) auf, das sowohl an eine Wärmeenergiequelle wie auch an eine Wärmeenergiesenke anschließbar ist,
**gekennzeichnet durch** die Merkmale:
- an die Einlassöffnung (17) des Reaktionsgefäßes (16) ist eine Förderpumpe (35) angeschlossen, mittels der die zu behandelnden Reststoffe mit Reaktionsdruck nach und nach in das Reaktionsgefäß (16) einbringbar und **dadurch** nach und nach **durch** das Reaktionsgefäß (16) hindurch bis zur Auslassöffnung (22) hin bewegbar sind,
- an die Auslassöffnung (22) des Reaktionsgefäßes (16) ist eine Druckschleuse (25) angeschlossen, mittels der die Reaktionsprodukte unter Beibehaltung des Reaktionsdruckes im Reaktionsgefäß (16) nach und nach aus diesem ausbringbar sind.

17. Vorrichtung nach Anspruch 15 oder 16,
**gekennzeichnet durch** die Merkmale:
- die Druckschleuse (25) bei der Auslassöffnung (22) ist entweder selbst als Vorrichtung zum Trennen der festen und der flüssigen Reaktionsprodukte ausgebildet oder sie wirkt mit einer solchen Trennvorrichtung zusammen.

18. Vorrichtung nach Anspruch 15 oder 16,
**gekennzeichnet durch** das Merkmal:
- zwischen der Auslassöffnung des Reaktionsgefäßes (45) und der Druckschleuse (51) ist zumindest ein zusätzliches Behandlungsgefäß (46; 49) für eine weitere Behandlung der Reaktionsprodukte angeschlossen.

19. Vorrichtung nach Anspruch 15 oder 16,
**gekennzeichnet durch** die Merkmale:
- das Reaktionsgefäß ( ) ist mit einer zweiten Auslassöffnung ( ) mit Druckschleuse ( ) ausgerüstet, mittels der zumindest ein Teil der flüssigen Reaktionsprodukte unter Beibehaltung des Reaktionsdruckes im Reaktionsgefäß ( ) aus diesem ausbringbar ist.

20. Vorrichtung nach Anspruch 15 oder 16,
**gekennzeichnet durch** die Merkmale:
- vor der Einlassöffnung des Reaktionsgefäßes (45) ist ein Wärmeübertrager (46) eingeschaltet,
- der entweder wenigstens von einem Teil der Reaktionsprodukte durchströmt wird
- und/oder der an eine sonstige Wärmeenergiequelle angeschlossen ist.

21. Vorrichtung nach Anspruch 15 oder 16,
**gekennzeichnet durch** das Merkmal:
- es ist eine mechanisch wirkende Vorrichtung (27) zum Trennen der festen und der flüssigen Reaktionsprodukte vorhanden.

22. Vorrichtung nach Anspruch 15 oder 16,
**gekennzeichnet durch** das Merkmal:
- es ist eine thermisch wirkende Vorrichtung ( ) zum Trennen der festen und der flüssigen Reaktionsprodukte vorhanden.

23. Vorrichtung nach Anspruch 15 oder 16,
**gekennzeichnet durch** das Merkmal:
- die Druckschleuse (15) bei der Einlassöffnung (17) ist als Zellradschleuse ausgebildet.

24. Vorrichtung nach Anspruch 16,
**gekennzeichnet durch** die Merkmale:
- die Förderpumpe (15) ist als Dickstoffpumpe, vorzugsweise als Doppelspindelpumpe ausgebildet.

25. Vorrichtung nach Anspruch 15 oder 16,
**gekennzeichnet durch** das Merkmal:
- die Druckschleuse (25) bei der Auslassöffnung (22) ist als Doppelspindelpumpe ausgebildet, die im Rückwärtsgang betrieben wird.

26. Vorrichtung nach Anspruch 15 oder 16,
**gekennzeichnet durch** die Merkmale:
- das Reaktionsgefäß (16) ist zumindest annähernd vertikal ausgerichtet,
- im Innenraum des Reaktionsgefäßes (16) ist ein Rührwerk (31) angeordnet,
- vorzugsweise hat das Rührwerk (31) eine Förderwirkung in Richtung auf die Auslassöffnung (22) hin.

27. Vorrichtung nach Anspruch 15 oder 16,
**gekennzeichnet durch** die Merkmale:
- das Reaktionsgefäß (65) ist zumindest annähernd horizontal ausgerichtet,
- im Innenraum des Reaktionsgefäßes (65 ist ein Rührwerk (79) angeordnet,
- vorzugsweise hat das Rührwerk (79) eine Förderwirkung in Richtung auf die Auslassöffnung hin.

28. Vorrichtung nach Anspruch 27,
**gekennzeichnet durch** das Merkmal:
- das Rührwerk (79) ist als Förderschnecke ausgebildet.

29. Vorrichtung nach Anspruch 26 oder 27,
**gekennzeichnet durch** die Merkmale:
- das Reaktionsgefäß (65) weist wenigstens einen Gasdom (69) auf oder steht mit einem Gasdom in Verbindung,
- der Gasdom (69) weist eine Druckschleuse (75) auf, mittels der die gasförmigen Reaktionsprodukte unter Beibehaltung des Reaktionsdruckes im Reaktionsgefäß (65) stetig oder in Teilmengen_aus diesem ausbringbar sind.

30. Vorrichtung nach Anspruch 15 oder 16 in Verbindung mit Anspruch 17 oder Anspruch 21,
**gekennzeichnet durch** die Merkmale:
- an die Auslassöffnung für die festen Reaktionsprodukte ist ein Trockner (53) angeschlossen.

31. Vorrichtung nach Anspruch 30,
**gekennzeichnet durch** die Merkmale:
- die Einlassöffnung des Trockners (53) ist an einen Wärmeübertrager (55) angeschlossen,
- an die Auslassöffnung des Trockners (53) ist ein Partikelabscheider (59) angeschlossen.
